# EUROPEAN PATENT APPLICATION

(11) **EP 2 779 659 A2**
(43) Date of publication of application: **17.09.2014**
(21) Application number: 14154097.1
(22) Date of filing: 06.02.2014
(51) Int. Cl.: H04N 21/2225

(54) **Control program, storage medium and control method**

(30) Priority: 13.03.2013 JP 2013050730
(71) Applicant: Kabushiki Kaisha Toshiba, Tokyo 105-8001 (JP)
(72) Inventor: Kamijima, Yuki, Tokyo, 105-8001 (JP)
(74) Representative: HOFFMANN EITLE

(57) **Abstract**

There is provided a control program executable in a computer to control a plurality of control-object devices connected to a network. The control program is separately started for each of the control-object devices. The control program is configured to perform a setting step and a saving step. The setting step comprises modifying contents of relevant data of the control-object devices or the control program. The saving step comprises saving the relevant data in a memory in different saving forms in association with respective control-object devices. It is possible to easily perform a separate control of the plurality of video servers, even when a plurality of control-object devices is controlled by one device.

## Description

### TECHNICAL FIELD

The present disclosure relates to a control program, a storage medium and a control method.

### BACKGROUND

There have been conventionally known techniques for controlling a control-object device, such as a server on a network, with a control application which is handled by the control-object device and installed in a PC. It is common that the control application saves relevant data such as settings and operation logs of the control-object devices, settings and operation logs of the control application and the like, in a particular folder of the PC.

In such a control application, for the purpose of avoiding mixture of information on a plurality of control-object devices, it is configured such that a process of one started control program can only control one control-object device. Accordingly, if a plurality of control-object devices is controlled by one PC installed with the control application, there is a need to start a plurality of control applications in association with the plurality of control-object devices.

### [PRIOR TECHNICAL LITERATURE]

### [Patent document]

Patent document 1: JP 2001-202257 A

However, in such a conventional control application, since the relevant data are saved in a particular folder in the PC, when a plurality of control application is started, the data of the same folder may be changed with the respective control applications, which may result in a difficulty in separate control of the control-object devices.

### SUMMARY

A control program according to the present embodiment is a control program executable in a computer to control plurality of control-object devices connected to a network. The control program is separately started for each of the control-object devices. The control program is configured to perform a setting step and a saving step. The setting step comprises modifying contents of relevant data of the control-object devices or the control program. The saving step comprises saving the relevant data in memory in different storage forms in association with respective control-object devices.

### BRIEF DESCRIPTION OF DRAWINGS

The accompanying drawings, which are incorporated in and constitute a part of the specification, illustrate embodiments of the present disclosure, and together with the general description given above and the detailed description of the embodiments given below, serve to explain the principles of the present disclosure.
**FIG 1** is a diagram showing a network configuration of a video server system according to a first embodiment.
**FIG. 2** is a block diagram showing a functional configuration of a PC according to the first embodiment.
**FIG. 3** is a diagram showing a relationship between a video server control application and video servers 200 according to the first embodiment.
**FIG 4** is a diagram showing a configuration of a video server control application folder according to the first embodiment.
**FIG 5** is a flow chart showing a video server control process according to the first embodiment.
**FIG 6** is a diagram showing an example of an environment selection screen according to the first embodiment.
**FIG 7** is a diagram showing an example of a saving screen according to the first embodiment.
**FIG 8** is a diagram showing an example of a conventional video server control folder structure.
**FIG 9** a diagram showing an example of saving of a conventional setting file.
**FIG 10** is a diagram used to explain saving of a setting file according to the first embodiment.
**FIG 11** is a diagram showing a configuration of a video server control application folder according to a second embodiment.
**FIG 12** is a flow chart showing a video server control process according to the second embodiment.
**FIG 13** is a flow chart showing a video server control process according to a third embodiment.
**FIG 14** is a diagram showing an example of a video server selection screen according to the third embodiment.

### DESCRIPTION OF EMBODIMENTS

Reference will now be made in detail to various embodiments, examples of which are illustrated in the accompanying drawings. In the following detailed description, numerous specific details are set forth in order to provide a thorough understanding of the present disclosure. However, it will be apparent to one of ordinary skill in the art that the present disclosure may be practiced without these specific details. In other instances, well-known methods, procedures, systems, and components have not been described in detail so as not to unnecessarily obscure aspects of the various embodiments.

Hereafter, a control program, a computer-readable medium and a control method according to some embodiments will be described with reference to the accompanying drawings. Although it is illustrated in the following embodiments that a control program is installed and executed in a personal computer (PC), without being limited thereto, it is to be understood that the embodiments can be applied to various devices other than the PC.

### (First Embodiment)

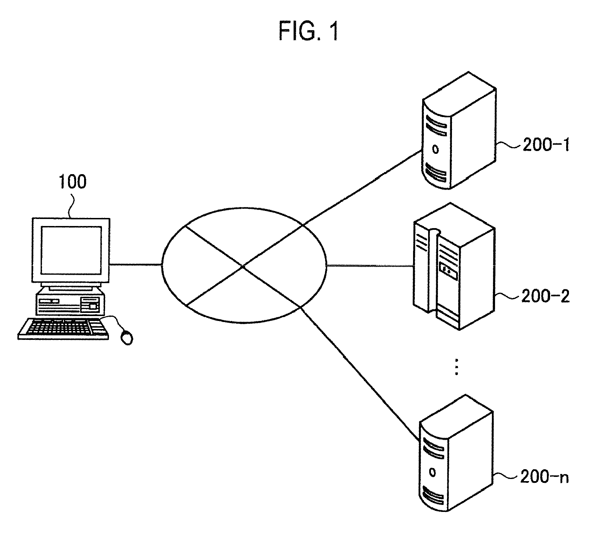

**FIG. 1** is a diagram showing a network configuration of a video server system according to a first embodiment. As shown in **FIG. 1****,** the video server system of the embodiment includes a plurality of video servers 200-1 to 200-n and a PC 100, all of which are connected to a network such as Internet, LAN (Local Area Network) and the like.

The video servers 200-1 to 200-n are a group of devices to store and deliver image data. The video servers 200-1 to 200-n may be optionally added to or deleted from the network. Hereinafter, the video servers 200-1 to 200-n may be simply referred to as a video server 200.

The PC 100 controls an operation of each video server 200-1 to 200-n serving as a control-object device. The PC 100 includes a central processing unit (CPU), memories such as a read-only memory (ROM) and a RAM, external memories such as a hard disk drive (HDD) 130 and a CD drive, a display 120 and an input device 110. Also, the PC 100 has a hardware configuration using a typical computer.

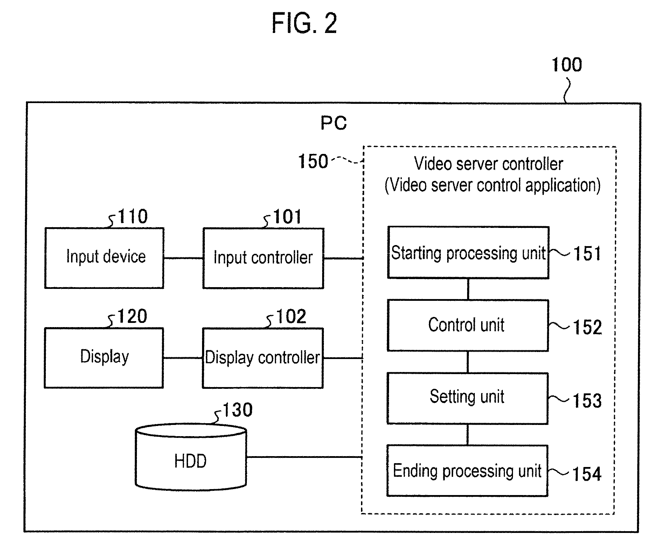

**FIG. 2** is a block diagram showing a functional configuration of the PC 100 according to the first embodiment. The PC 100 of the embodiment mainly includes the input device 110, the display 120, an input controller 101, a display controller 102, a video server controller 150 and the HDD 130.

The input device 110 may include, for example, a keyboard, a mouse and the like. The input controller 101 controls an input from the input device 110, such as receiving an input event from the input device 110. The display 120 is a display device. The display controller 102 controls display for the display 120.

The HDD 130 is a storage medium storing various data used or generated by the video server controller 150, which will be described later. In the embodiment, a file system is formed in the HDD 130. Also, various data used or generated by the video server controller 150 are stored in a video server control application folder (VS_Control folder) as a specific folder of the file system. The video server control application folder (VS_Control folder) will be described in more detail later.

The video server controller 150 controls an operation of the video servers. The video server controller 150 is a process generated on a memory such as the RAM by the CPU executing a video server control program installed in the HDD 130 and the like. Herein, the process generated by executing the video server control program refers to a video server control application and corresponds to the video server controller 150.

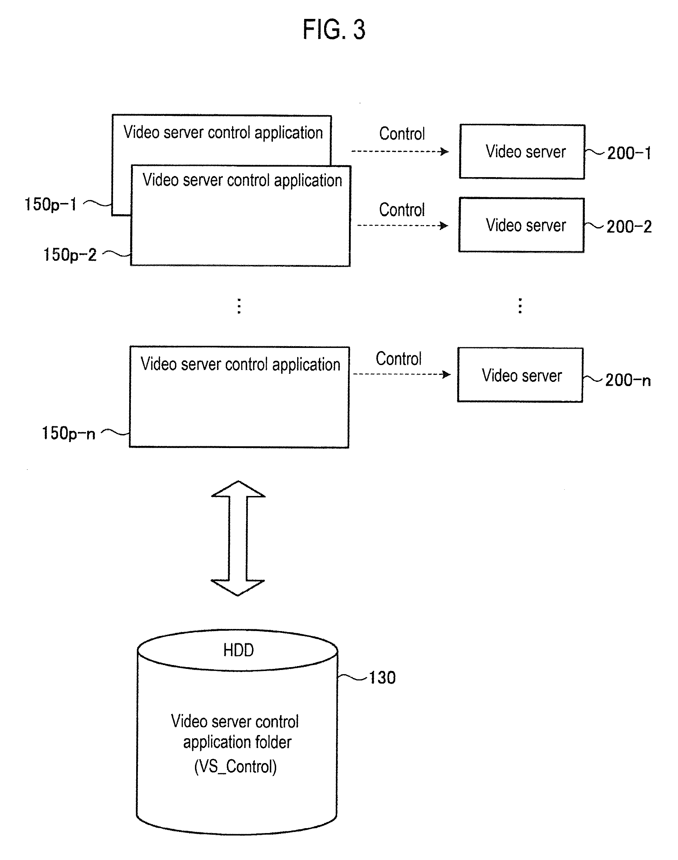

FIG 3 is a diagram showing a relationship between the video server control application and the video servers 200 according to the first embodiment. In the embodiment, the video server control application is started for one video server 200, and thus serves as the video server controller 150. Therefore, as shown in **FIG 3****,** when the plurality of video servers 200-1 to 200-n are controlled, video server control applications 150p-1 to 150p-n of the same number as the number of the video servers are started and operated. Then, each of the video server control applications 150p-1 to 150p-n accesses to the video server control application folder (VS_Control folder) of the HDD 130 and uses data in the folder or generates data in the folder.

Also, the video server control applications 150p-1 to 150p-n may be simply referred to as a video server control application 150p.

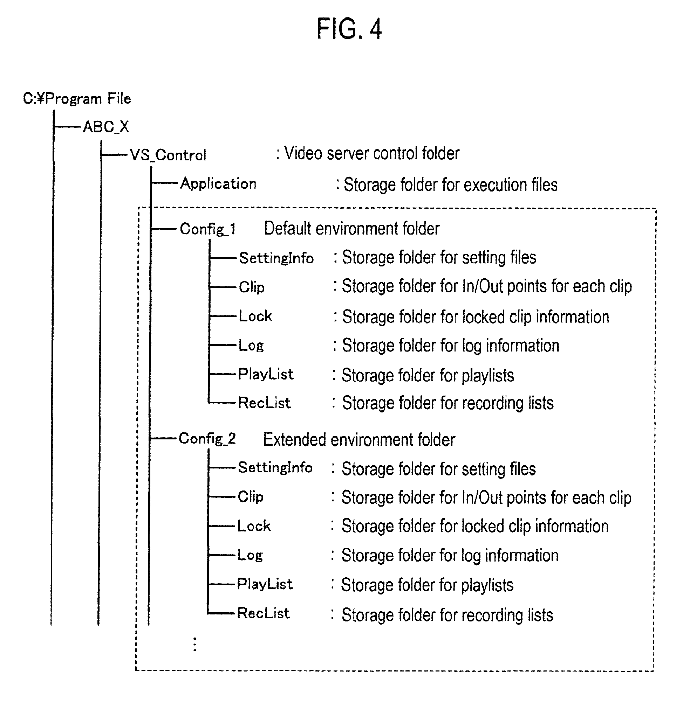

**FIG 4** is a diagram shows a configuration of the video server control application folder (VS_Control folder) according to the first embodiment. As shown in **FIG 4****,** the video server control application folder has a default environment folder (Config_1) and a plurality of extended environment folders (Config_2, Config_3 ...). One environment folder stores data of one video server control application 150p controlling one video server. Therefore, the number of the default environment folder and the extended environment folders is varied depending on the number of video servers 200.

Each of the environment folders includes a storage folder for setting files (SettingInfo), a storage folder for In/Out points (Clip) for each clip, a storage folder for locked clip information (Lock), a storage folder for log information (Log) which saves logs, a storage folder for playlists (PlayList) which saves playlists, and a storage folder for recording lists (RecList) which saves recording lists.

Herein, the storage folder for setting files stores setting files. The setting files are set with their respective environment names. The environment names refer to identification information for identifying environment folders corresponding to the video servers. In the example of **FIG. 4****,** an environment name of the default environment folder is Config1 and an environment name of the extended environment folder is CongfigM (M is an integer from 2 to n). In addition, "environment name: Config1" is registered in the setting file of the storage folder for setting files of the default environment folder (Config_1), "environment name: Config2" is registered is the setting file of the storage folder for setting files of the extended environment folder (Config_2), etc. However, it should be noted herein that the description of the environment name and setting file is not limited thereto. Also, identification information of the environment name and the video server 200 corresponding to the environment name are registered in each of the setting files in a mutually associated form as "environment name - video server 200-1".

Further, various setting contents of the video server 200 corresponding to the environment and various setting contents of the video server control application 150p to control the video server 200 are registered in the setting file. In addition, various setting files may be saved in the storage folder for setting files.

Hereinafter, various data saved in each folder of the environment folder, that is, setting files, In/Out points for each clip, clip information, logs, playlists, recording lists and the likes may be simply referred to as "relevant data" of the video server 200 and the video server control application 150p.

Referring back to **FIG 2****,** the video server controller 150 (i.e., video server control application 150p) will be described in detail. As shown in **FIG 2****,** the video server controller 150 mainly includes a starting processing unit 151, a control unit 152, a setting unit 153 and an ending processing unit 154.

The starting processing unit 151 executes a series of starting process when a video server control application is started. In the embodiment, the starting processing unit 151 acquires an environment name from a setting file in the storage folder for setting files of each of the default environment folder and all extended environment folders and displays a list of environment names on the display 120 through the display controller 102, as the starting process. Also, the starting processing unit 151 receives a desired environment name selected from the plurality of environment names by a manipulation of the input device 110 of a user through the input controller 101 and selects an environment folder corresponding to the selected environment name. Then, the starting processing unit 151 reads a setting file and various data from the selected environment folder.

The control unit 152 controls an operation of the video server 200 to be controlled by the video server control application 150p. The setting unit 153 adds or changes contents of the relevant data of the video server 200 or the video server control application 150p.

The ending processing unit 154 performs an ending process when control of the video server 200 by the video server control application 150p is ended. As the ending process, the ending processing unit 154 stores relevant data of settings reconfigured by the setting unit 153 in the video server control folder in a storage form corresponding to the control-object video server 200 but stores the relevant data in a different storage form for video servers 200 other than the control-object video server. That is, the relevant data are saved in different environment folders for different video servers 200.

In more detail, if a user designates the storage of the relevant data as overwriting, the ending processing unit 154 stores the relevant data in an environment folder selected by the starting processing unit 151. In addition, if the user designates the storage of the relevant data as a different name, the ending processing unit 154 generates a new extended environment folder in the video server control server and stores the relevant data in the new extended environment folder.

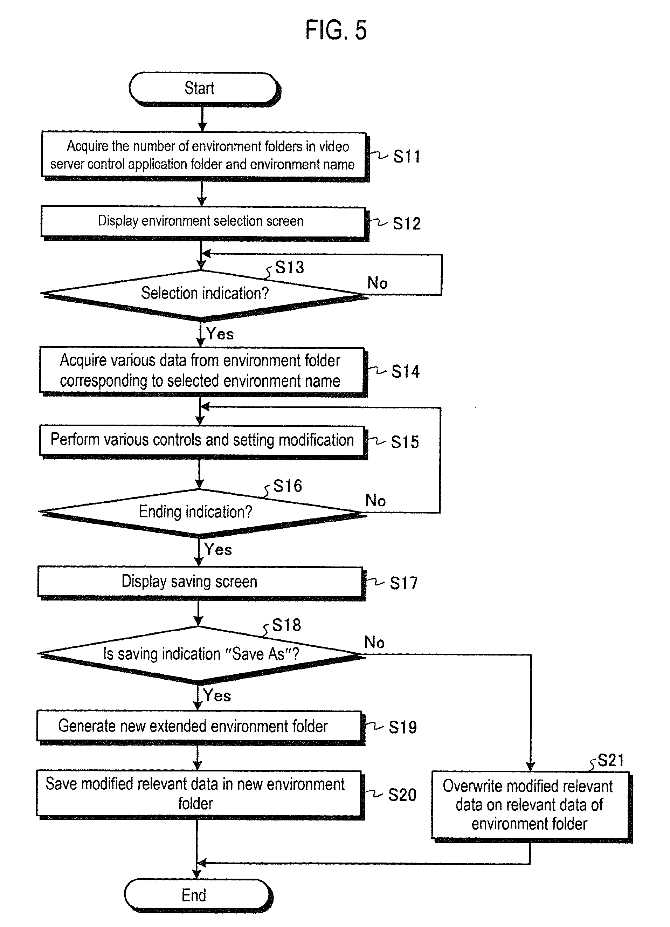

Next, a video server control process performed by the video server controller 150 (video server control application 150p) of the PC 100 of the embodiment as configured above will be described. **FIG. 5** is a flow chart showing the video server control process according to the first embodiment.

When the video server control application 150p is started, the starting processing unit 151 acquires the number of environment folders in the video server control folder (VS_Control) and an environment name described in a setting file in the storage folder for setting files (SettingInfo) of each environment folder (Step S11).

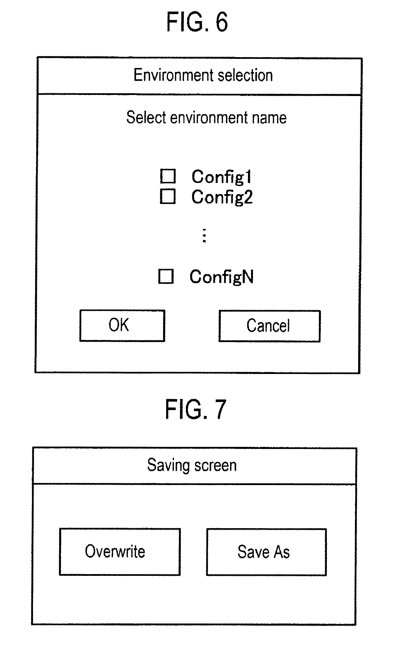

Next, the starting processing unit 151 generates a list of the acquired environment names and displays an environment selection screen on the display 120 through the display controller 102 (Step S12). The environment selection screen is a screen to allow a user to select an environment name from the environment name list generated by the starting processing unit 151. **FIG 6** is a diagram showing an example of the environment selection screen. As shown in **FIG 6****,** the environment selection screen is displayed with a list of environment names Config1 to ConfigN acquired from each setting file of the storage folder for setting files of each environment folder (default environment folder and extended environment folders) and check boxes for selection indication.

Referring back to **FIG 5****,** when the environment selection screen is displayed on the display 120, the starting processing unit 151 enters an input standby state for selection indication (Step S 13: No). When a user designates a check box of a desired environment name from the environment selection screen and clicks on an OK button by means of the input device 110, the starting processing unit 151 receives the selection indication through the input controller 101 (Step S 13: Yes) and acquires various data from an environment folder corresponding to the selected environment name (Step S 14).

Then, the control unit 152 performs various controls of the control-object video server 200 and the setting unit 153 performs a modification process of various setting items as necessary (Step S15). While these control and setting processes are performed, the control unit 152 enters an input standby state for ending indication from the user (Step S16: No).

Then, when an ending indication is received from the user (Step S16: Yes), the ending processing unit 154 starts an ending process and displays a saving screen on the display 120 through the display controller 102 (Step S17). The saving screen is a screen to allow the user to indicate saving of data of the modified setting items and relevant data of generated logs, clips and the like. **FIG. 7** is a diagram showing an example of the saving screen. As shown in **FIG 7****,** the saving screen is displayed with "Overwrite" and "Save As" which can be selected by the user.

"Overwrite" refers to saving of a setting item as a setting of a video server 200 corresponding to an environment name selected in Step S13. Also, "Save As" refers to saving of a new setting item as a setting of a video server 200 other than the video server 200 corresponding to an environment name selected in Step S 13.

Referring back to **FIG 5****,** the ending processing unit 154 receives the saving indication selected by the user on the saving screen through the input controller 101 and determines whether or not the saving indication is "Save As" (Step S18). If the saving indication is "Overwrite", not "Save As" (Step S 18: No), the ending processing unit 154 overwrites the relevant data of the contents modified in Step S15 on the relevant data of the environment folder of the environment name selected in Step S 13 (Step S21).

On the other hand, if the saving indication is "Save As" (Step S18: Yes), the ending processing unit 154 generates a new extended environment folder, which is different from the environment folder of the environment name selected in Step S 13, in the video server control folder (VS_Control) (Step S 19). At this time, the ending processing unit 154 generates a storage folder for setting files in the new extended environment folder, generates a setting file in the storage folder for setting files, and registers an environment name of a folder name of the new extended environment folder in the setting file.

Then, the ending processing unit 154 saves the relevant data of the contents modified in Step S15 in the new extended environment folder generated in Step S 19 (Step S20).

In the embodiment, while the video server 200 is controlled or when the setting items are modified by the settings, the video server control application 150p stores relevant data such as the setting items in the video server control folder in a storage form corresponding to the control-object video server 200 but stores relevant data in a different storage form for video servers 200 other than the control-object video server. That is, when saving the setting contents of the video server 200 different from before, the video server control application 150p generates a new extended environment folder in the video server control folder and saves the relevant data in the new extended environment folder. Thus, according to the embodiment, even when a plurality of video servers 200 is controlled by one PC 100, it is possible to easily perform a separate control of the plurality of video servers 200.

In addition, according to the embodiment, when an operation log is recorded as the relevant data, even if each of a plurality of started video server control applications saves a log file under the same naming rule, since the saved environment folders are different, it is possible to avoid a mixture of operation logs of the video server control applications 150p. Thus, it is possible to easily analyze the logs.

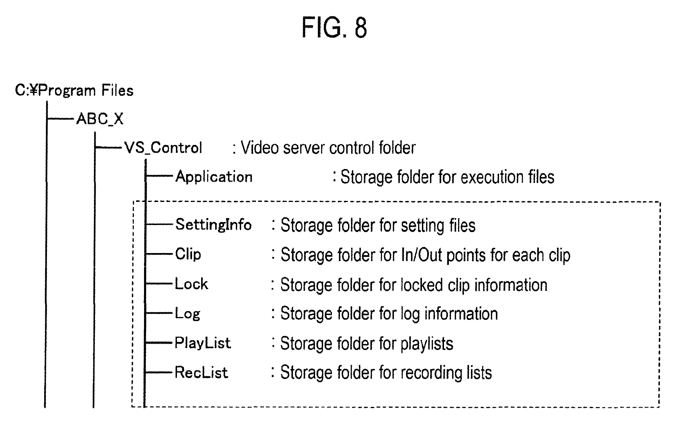

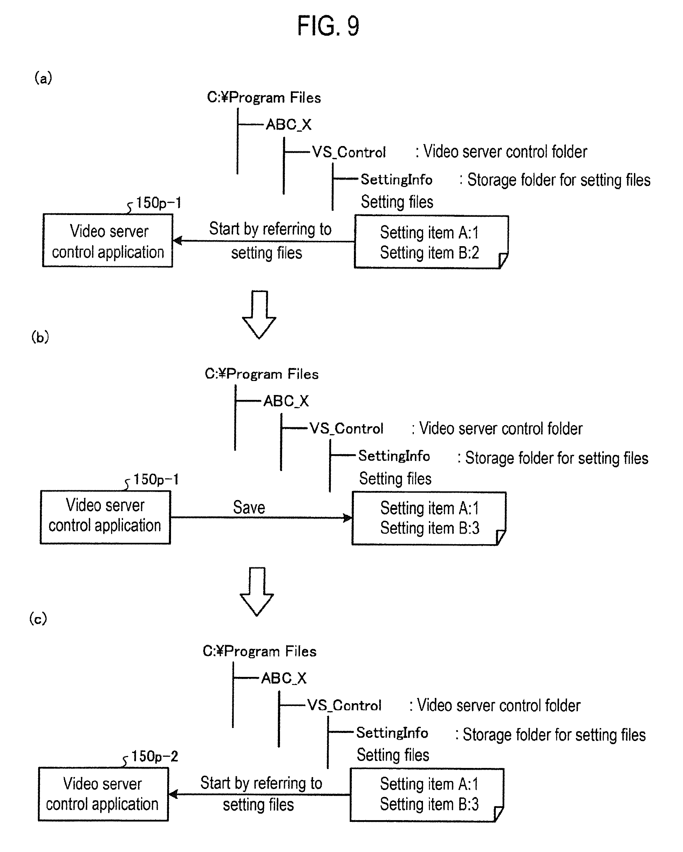

Effects of the embodiment will now be described in detail. **FIG 8** is a diagram showing an example of a video server control folder structure without the environment folder. FIG 9 is a diagram showing an example of saving of a setting file using a video server control folder without the environment folder. For example, as shown in **FIG 8****,** consider a file system in which the video server control folder (VS_Control) has no environment folder and each folder for saving of relevant data is used in common for a plurality of video server control applications 150p.

In this case, for example, as shown in **FIG 9A****,** assume that a video server control application 150p-1 corresponding to a video server 200-1 is started by referring to a setting file.

In addition, as shown in **FIG. 9B****,** assume that the video server control application 150p-1 saves the setting file with a setting item B of the setting file changed from "2" to "3." Assume that the value "3" of the setting item B is a valid value for the video server 200-1 and "2" is a valid value for a different video server.

Then, as shown in **FIG 9C****,** in order to control the different video server 200-2, when a video server control application 150p-2 corresponding to the video server 200-2 is started by referring to the setting file, the setting item B is controlled to read the value "3", which is not valid for the video server 200-2.

That is, after a video server control application 150p-1 started for controlling one video server 200-1 modifies a setting item B and reflects in a setting file, a video server control application 150p-2 started for controlling a different video server 200-2 reflects the setting item B set for the video server 200-1. Thus, it is difficult to separately control the video servers 200-1 and 200-2.

In addition, when an operation log is recorded as the relevant data, since each of a plurality of started video server control applications 150p-1 and 150p-2 saves a log file under the same naming rule, logs of the video server control applications 150p-1 and 150p-2 are mixed. Thus, it is difficult to analyze the logs.

For this reason, in the embodiment, as shown in **FIG 4****,** different environment folders are installed for different video servers 200 in the video server control folder and the relevant data such as the setting items are saved in the environment folders corresponding to the control-object video servers 200.

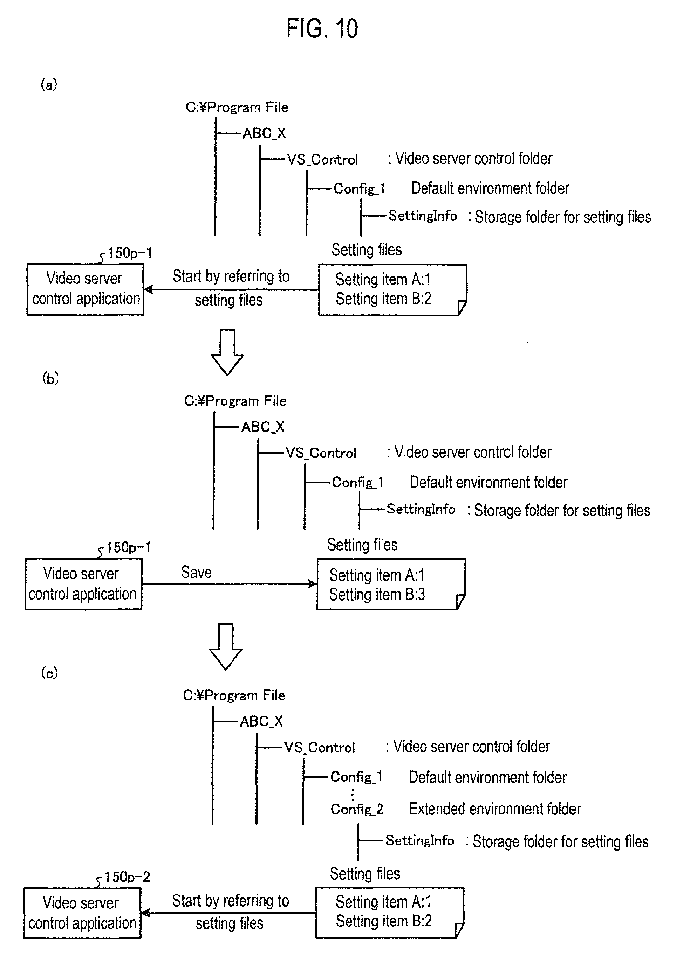

FIG **10** is a diagram used to explain saving of a setting file according to the first embodiment. For example, as shown in **FIG. 10A****,** assume that the video server control application 150p-1 corresponding to the video server 200-1 is started by referring to a setting file in the environment folder Config_1. In addition, as shown in FIG **10B****,** assume that the video server control application 150p-1 overwrites the setting file in Config_1 with the setting item B of the setting file changed from "2" to "3." Herein, similarly to the example of FIGS. **9A** to **9C****,** assume that the value "3" of the setting item B is a valid value for the video server 200-1 and "2" is a valid value for a different video server.

Then, as shown in **FIG 10C****,** in order to control the different video server 200-2, a video server control application 150p-2 corresponding to the video server 200-2 is started. However, since a setting file in an extended environment folder Config_2 corresponding to the video server 200-2 is referred at this time, the setting item B does not read the value "3" which is not valid for the video server 200-2. Therefore, the video servers 200-1 and 200-2 can be separately controlled without causing any confusion.

### (Second Embodiment)

While it has been illustrated in the first embodiment that the relevant data such as the setting files are saved in different environment folders for each video server 200 in the video server control folder; it is illustrated in a second embodiment that the relevant data are saved with different file names for each video server 200 in each folder of the video server control folder.

The network configuration, the configuration of the PC 100, and the function of the video server 200 in the video server system of the second embodiment are the same as those of the first embodiment.

In the second embodiment, as an ending process, the ending processing unit 154 of the video server controller 150 (video server control application 150p) saves the relevant data such as the settings reconfigured by the setting unit 153 with different file names for different video servers 200 in the video server control folder.

In more detail, if a user designates overwriting for saving of the relevant data, the ending processing unit 154 overwrites on existing relevant data. In addition, if the user designates a different name for saving of the relevant data, the ending processing unit 154 generates the relevant data with a new file name and saves the relevant data in the video server control folder.

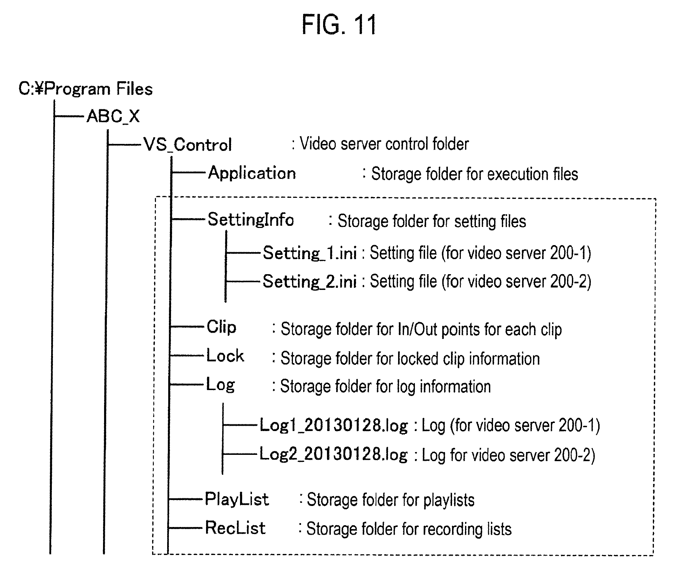

**FIG 11** is a diagram showing a configuration of the video server control application folder (VS_Control folder) according to the second embodiment. As shown in **FIG 11****,** without any environment folder as described in the first embodiment, the video server control application folder directly includes a storage folder for setting files (SettingInfo), a storage folder for In/Out points (Clip) for each clip, a storage folder for locked clip information (Lock), a storage folder for log information (Log) which saves logs, a storage folder for playlists (PlayList) which saves playlists, and a storage folder for recording lists (RecList) which saves recording lists.

Also, the relevant data are saved in each folder with different file names for different video servers 200. For example, in the example of **FIG 11****,** a setting file (Setting_1.ini) for the video server 200-1 and a setting file (Setting_2.ini) for the video server 200-2 are saved in the storage folder for setting files (SettingInfo) with different file names. In addition, a log file (Log1_20130128.log) for the video server 200-1 and a log file (Log2_20130128.log) for the video server 200-2 are saved in the storage folder for log information (Log) with different file names.

Further, although it has been illustrated in the example of **FIG 11** that the relevant data are saved in each of the storage folder for setting files and the storage folder for log information, without being limited thereto, the relevant data may be saved in other folders with different file names.

Herein, assume that the setting files of the same number as the number of the video servers 200 are generated in association with the video servers 200. On the other hand, in folders other than the storage folder for setting files, the relevant data are not necessarily saved with files of the same number as the number of the video servers 200 but are generated depending on operation control of the video servers 200.

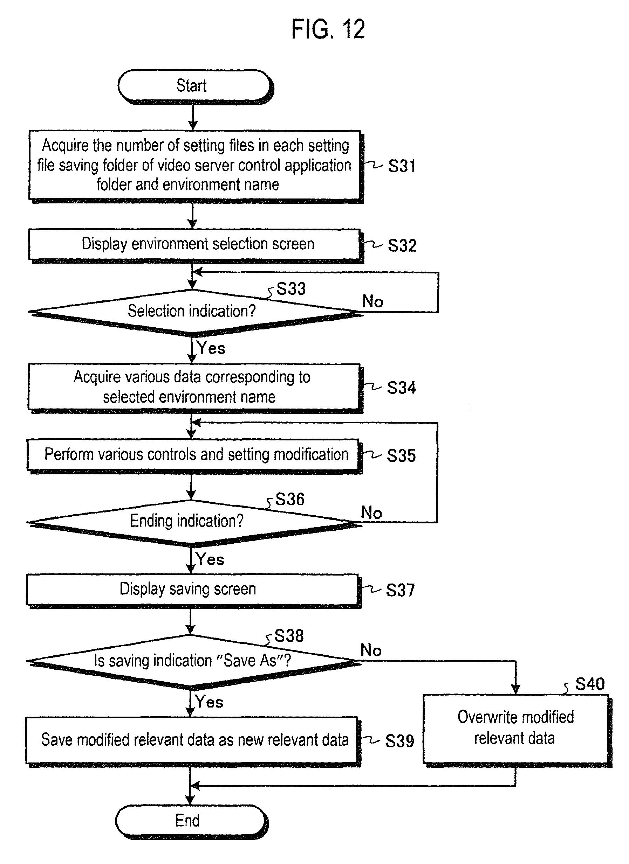

Next, a video server control process performed by the video server controller 150 (video server control application 150p) of the PC 100 of the embodiment as configured above will be described. **FIG 12** is a flow chart showing the video server control process according to the second embodiment.

When the video server control application 150p is started, the starting processing unit 151 acquires the number of environment folders in the video server control folder (VS_Control) and an environment name described in each setting file (Step S31).

Next, the starting processing unit 151 generates a list of the acquired environment names and displays an environment selection screen on the display 120 through the display controller 102 (Step S32). The environment selection screen is similar to the environment selection screen of the first embodiment shown in **FIG 6****.**

When the environment selection screen is displayed on the display 120, the starting processing unit 151 enters an input standby state for selection indication (Step S33: No). When a user designates a check box of a desired environment name from the environment selection screen and clicks on an OK button by means of the input device 110, the starting processing unit 151 receives the selection indication through the input controller 101 (Step S33: Yes) and acquires relevant data corresponding to the selected environment name from each folder in the video server control folder (Step S34).

Then, the control unit 152 performs various controls of the control-object video server 200 and the setting unit 153 performs a modification process of various setting items as necessary (Step S35). While these control and setting processes are performed, the control unit 152 enters an input standby state for ending indication from the user (Step S36: No).

Then, when an ending indication is received from the user (Step S36: Yes), the ending processing unit 154 starts an ending process and displays a saving screen on the display 120 through the display controller 102 (Step S37). The saving screen is similar to the saving screen of the first embodiment shown in **FIG 7****.**

The ending processing unit 154 receives the saving indication selected by the user on the saving screen through the input controller 101 and determines whether or not the saving indication is "Save As" (Step S38). If the saving indication is "Overwrite", not "Save As" (Step S38: No), the ending processing unit 154 overwrites the relevant data of the contents modified in Step S35 on the relevant data of the environment name selected in Step S33 (Step S40).

On the other hand, if the saving indication is "Save As" (Step S38: Yes), the ending processing unit 154 generates new relevant data with a file name, which is different from the file name of the relevant data of the environment name selected in Step S33, in the video server control folder (VS_Control) (Step S39). At this time, the ending processing unit 154 generates a setting file with a file name, which is different from the file name of the existing setting file, in the setting file saving folder, and registers a new environment name in the generated setting file.

In the embodiment, since the relevant data are saved in each folder of the video server control folder with different file names for different video servers 200, even when a plurality of video servers 200 is controlled by one PC 100, it is possible to avoid that the same relevant data are reused to control the plurality of video servers 200. Thus, it is possible to easily perform a separate control of the plurality of video servers 200.

### (Third Embodiment)

While it has been illustrated in the first embodiment that a user selects whether to save the relevant data in the form of "Overwrite" or "Save As" in the ending process of the video server control application 150p to determine a saving destination of settings for the control of the video servers 200, it is illustrated in a third embodiment that the user is allowed to select a control-object video server 200 in the starting process of the video server control application 150p to determine an environment folder of the selected video server 200, and a new environment folder is generated for a new control-object video server 200.

A video server system of the third embodiment has the same configuration of the network and the PC 100 and the same function of the video server 200 as those of the first embodiment.

The video server control application folder (VS_Control folder) of the third embodiment has the same configuration as that of the first embodiment shown in **FIG 4****.** In the third embodiment, the video server control application folder (VS_Control folder) has different environment folders for different video servers 200, each environment folder including a storage folder for setting files (SettingInfo), a storage folder for In/Out points (Clip) for each clip, a storage folder for locked clip information (Lock), a storage folder for log information (Log) which saves logs, a storage folder for playlists (PlayList) which saves playlists, and a storage folder for recording lists (RecList) which saves recording lists.

In the embodiment, as a starting process, the starting processing unit 151 of the video server controller 150 (video server control application 150p) causes a user to select a control-object video server 200 from the plurality of video servers 200.

Also, the ending processing unit 154 saves the relevant data in the video server control application folder (VS_Control folder) of the HDD 130 in a storage form corresponding to the control-object video server 200 selected by the user. That is, the ending processing unit 154 saves the relevant data in an environment folder corresponding to the selected control-object video server 200.

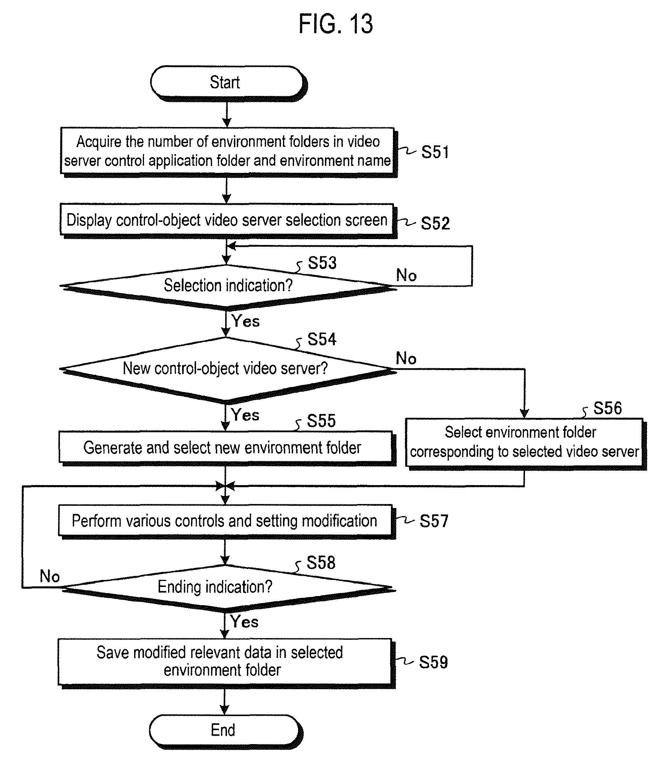

Next, a video server control process performed by the video server controller 150 (video server control application 150p) of the PC 100 of the embodiment as configured above will be described. **FIG 13** is a flow chart showing the video server control process according to the third embodiment.

When the video server control application 150p is started, the starting processing unit 151 acquires the number of environment folders in the video server control folder (VS_Control) and an environment name described in a setting file in the setting file saving folder (SettingInfo) in each environment folder (Step S51).

Next, the starting processing unit 151 generates a list of video servers 200 corresponding to the acquired environment names and displays a video server selection screen on the display 120 through the display controller 102 (Step S52). The video server selection screen is a screen to allow a user to select a control-object video server 200 from the list of video servers 200 corresponding to the environment names generated by the starting processing unit 151 or select a new video server.

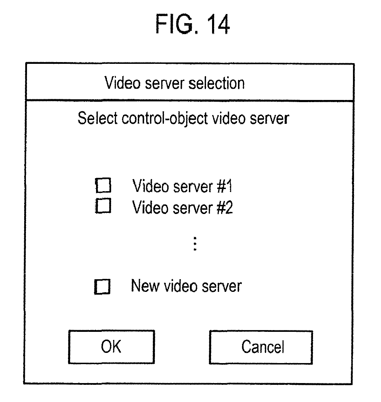

**FIG 14** is a diagram showing an example of the video server selection screen. As shown in **FIG 14****,** the video server selection screen is displayed with a list of video servers corresponding to the environment names acquired in Step S51, a new video server and check boxes for selection indication.

Referring back to **FIG 13****,** when the video server selection screen is displayed on the display 120, the starting processing unit 151 enters an input standby state for selection indication (Step S53: No). When a user designates a check box of a desired video server from the video server selection screen and clicks on an OK button by means of the input device 110, the starting processing unit 151 receives the selection indication through the input controller 101 (Step S53: Yes) and determines whether or not the new video server is selected (Step S54).

If the selection indication is for an established video server 200, not for the new video server 200 (Step S54: No), the starting processing unit 151 selects an environment folder corresponding to the selected video server 200 (Step S56). Then, the starting processing unit 151 acquires various data from the selected environment folder.

On the other hand, if the selection indication is for the new video server 200 in Step S54 (Step S54: Yes), the starting processing unit 151 generates a new environment folder in the video server control folder and selects the new environment folder (Step S55). In addition, the new video server 200 may be designated by causing the user to input identification information of the new video server or detecting a non-control-object video server from the accessed video servers 200.

Then, the control unit 152 performs various controls of the control-object video server 200, and the setting unit 153 performs a modification process of various setting items as necessary (Step S57). While these control and setting processes are performed, the control unit 152 enters an input standby state for ending indication from the user (Step S58: No).

Then, when an ending indication is received from the user (Step S58: Yes), the relevant data of the contents modified in Step S57 are saved in the relevant data of the environment folder selected in Steps S55 and S56 (Step S59).

In the embodiment, since in the starting process of the video server control application 150p, the control-object video server 200 is selected by the user, an environment folder of the selected video server 200 is determined, and a new environment folder is generated for the new control-object video server 200, even when a plurality of video servers 200 is controlled by one PC 100, it is possible to avoid that the same relevant data are reused to control the plurality of video servers 200. Thus, it is possible to easily perform a separate control of the plurality of video servers 200.

The video server control program executed by the PC 100 of the embodiment is provided as a file having an installable format or an executable format in a state of being recorded on a non-transitory computer-readable recording medium such as a CD-ROM, a flexible disk (FD), a CR-R, a digital versatile disk (DVD) and the like.

Alternatively, the video server control program executed by the PC 100 of the embodiment may be provided by storing the program in a computer connected to a network such as the Internet and downloading the program through the network. In addition, the video server control program executed by the PC 100 of the embodiment may be provided or distributed through the network such as the Internet.

Further, the video server control program executed by the PC 100 of the embodiment may be incorporated into a ROM and the like.

The video server control program executed by the PC 100 of the embodiment is configured by a module including the above-described components (starting processing unit 151, control unit 152, control unit 153 and ending processing unit 154). When the CPU as an actual hardware reads and executes the video server control program from the storage medium, the components are loaded into the RAM and the starting processing unit 151, the control unit 152, the control unit 153 and the ending processing unit 154 are generated on the RAM.

Although a control-object device has been illustrated with a video server 200 in the above embodiments, without being limited thereto, any device may be employed as a control-object device.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A control program executable in a computer to control a plurality of control-object devices connected to a network, the control program configured to perform the following:
modifying contents of relevant data of the control-object devices or the control program; and
saving the relevant data in a memory in different storage forms in association with respective control-object devices, wherein the control program is separately started for each of the control-object devices.

2. The control program of Claim 1, wherein saving comprises saving the relevant data in different folders for the control-object devices.

3. The control program of Claim 1 or 2, wherein saving comprises saving the relevant data with different file names for the control-object devices.

4. The control program of one of Claims 1 to 3 further comprising, when the control program is started, executing to the computer starting processing for causing a user to select a desired environment name from the different environment names for the different storage forms, and
wherein saving comprises saving the relevant data in the memory in a storage form corresponding to the selected environment name.

5. The control program of one of Claims 1 to 4 further comprising, when the control program is started, executing to the computer starting processing for causing a user to select a desired control-object device from the plurality of control-object devices, and
wherein the saving comprises saving the relevant data in the memory in a storage form corresponding to the selected control-object device.

6. The control program of one of Claims 1 to 5 wherein the control-object devices comprise video servers.

7. A computer readable storage medium comprising a control program executable in a computer to control a plurality of control-object devices connected to a network, the control program configured to perform following acts:
a setting step for modifying contents of relevant data of the control-object devices or the control program; and
a saving step for saving the relevant data in a memory in different storage forms in association with respective control-object devices,
wherein, the control program is separately started for each of the control-object devices.

8. The computer readable storage medium of claim 7 wherein the control-object devices comprise a video server.

9. A method of controlling a plurality of control-object devices connected to a network, comprising:
a setting step for modifying contents of relevant data of the control-object devices or a control program; and
a saving step for saving the relevant data in a memory in different storage forms in association with respective control-object devices.

10. The method of claim 9 wherein the control-object devices comprise video servers.
